# EUROPÄISCHE PATENTANMELDUNG

(11) **EP 1 479 685 A1**
(43) Veröffentlichungstag der Anmeldung: **24.11.2004**
(21) Anmeldenummer: 04010777.3
(22) Anmeldetag: 06.05.2004
(51) Int. Cl.: C07F 5/02

(54) **Verfahren zur Herstellung von Pyridin-2-boronsäureestern**

(30) Priorität: 19.05.2003 DE 10322844
(71) Anmelder: Clariant GmbH, 65929 Frankfurt am Main (DE)
(72) Erfinder: Meudt, Andreas, Dr., 65719 Hofheim (DE); Lehnemann, Bernd, Dr., 60326 Franfurt (DE); Scherer, Stefan, Dr., 64572 Büttelborn (DE); Kalinin, Alexei, Dr., Kingston ON, 7, KM 8Y5 (CA); Snieckus, Victor, Dr., Kingston ON, K7L 2G4 (CA)
(74) Vertreter: Hütter, Klaus, Dr.

(57) **Zusammenfassung**

Verfahren zur Herstellung von 2-Pyridinboronsäureestern der Formel I, 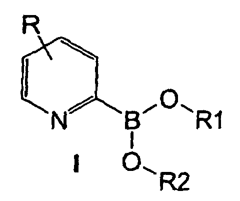 durch Umsetzung eines 2-Halogenpyridins (II) mit einem Metallierungsreagenz zu einer Organometallverbindung (III) (Schritt 1), anschließender Reaktion von (III) mit einem geeignetem Borsäureester (IV) zu Pyridin-Borkomplexsalzen (V) (Schritt 2), und abschließender Umsetzung der Komplexsalze (V) mit einer Protonenquelle unter Abspaltung eines Esterrestes am Bor zu 2-Pyridinboronsäureestern der Formel (I), 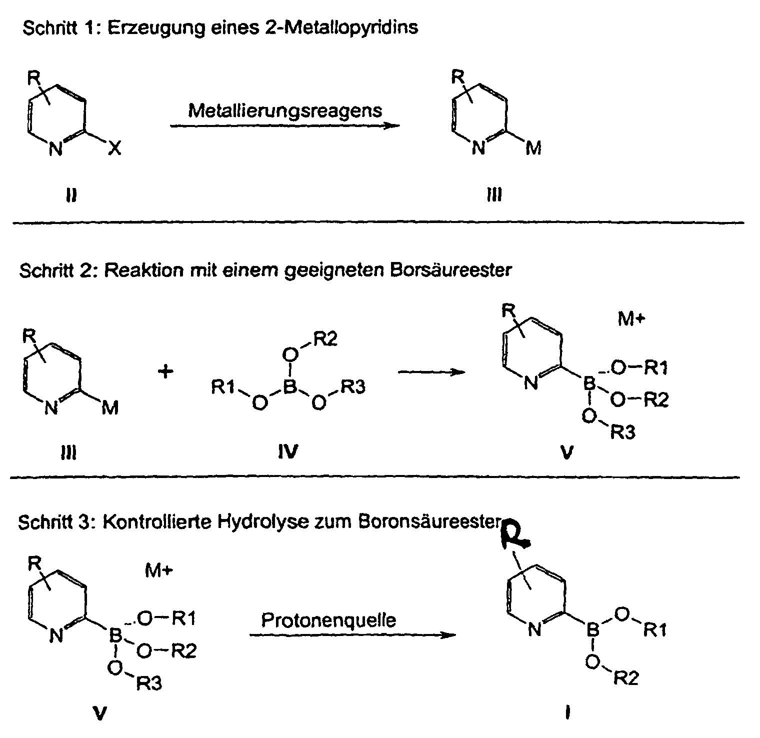 wobei
X H, Cl, Br, I oder F ist;
M Li oder MgHal (Hal = Cl, Br) bedeutet;
R beispielsweise für H, F, Cl, Br, I, einen C₁-C₂₀-Alkyl- oder Alkoxyrest, einen C₆ bis C₁₂-Arylrest oder einen Heteroarylrest, einen Cycloalkylrest oder für eine Cyano-, Ester-, Acetal, Mono- oder Dithioacetal oder Aminalgruppe steht;
die Reste R¹, R², R³ stehen unabhängig voneinander z.B. für einen C₁-C₂₀-Alkyl-oder Alkoxyrest, einen Cycloalkyl- oder einen gegebenenfalls substituierten C₆ bis C₁₂-Arylrest oder zwei Reste R¹ bis R³ bilden zusammen einen Ring.

## Beschreibung

Die Erfindung betrifft ein Verfahren zur Herstellung von Pyridin-2-boronsäureestern, wobei ein gegebenenfalls substituiertes Pyridinderivat zunächst in 2-Position metalliert wird und dann mit einem geeigneten, gegebenenfalls substituierten Borsäuretriester zu einem at-Komplex des tetravalenten Bors umgesetzt wird, der dann unter kontrollierten Bedingungen zu einem Pyridyl-2-boronsäureester gespalten wird (GLEICHUNG 1).

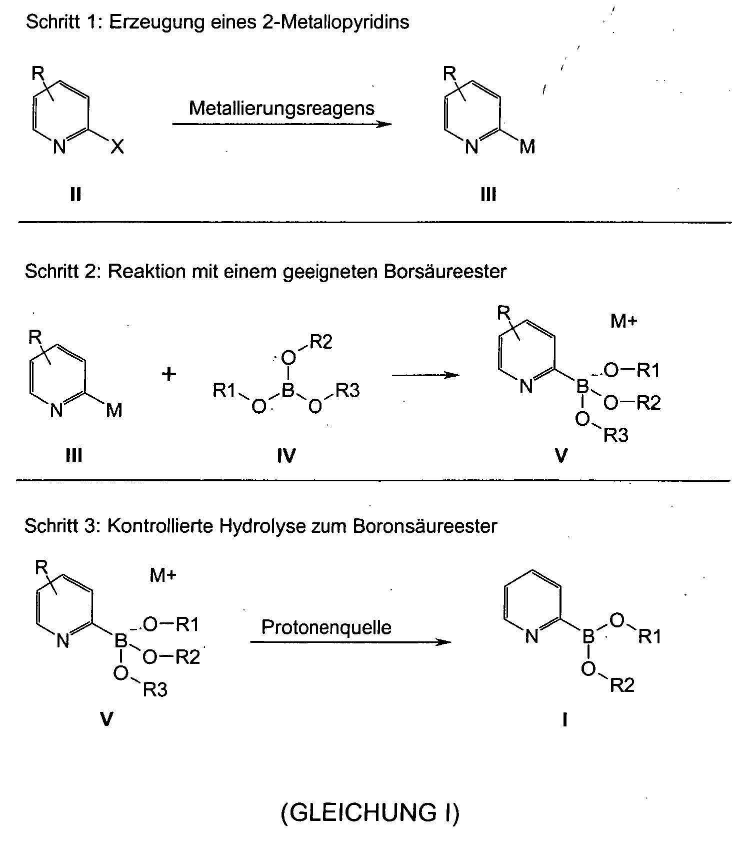

Die Anwendung übergangsmetallkatalysierter Reaktionen, insbesondere zur Knüpfung von Kohlenstoff-Kohlenstoff-Bindungen mit Palladium- oder Nickelkatalysatoren, hat in den letzten Jahren zunehmend Eingang in die industrielle Synthese von pharmazeutischen Wirkstoffen, Spezial- und Feinchemikalien gefunden, die häufig unter sehr milden Bedingungen und mit guten Chemoselektivitäten ablaufen. Dabei wird im allgemeinen ein Alkenyl-, Alkinyl-, Aryl- oder Heteroarylhalogenid mit einem Alken (Heck-Reaktion) oder einer metallorganischen Verbindung gekuppelt. Insbesondere mit klassischen Synthesemethoden nicht zugängliche, asymmetrisch substituierte Biphenyl-Derivate werden auf diese Weise hergestellt. Die dabei bevorzugt angewandte Methode ist neben der Kumada-Kupplung, die Grignard-Verbindungen verwendet, die Suzuki- oder Suzuki-Miyaura-Kupplung, bei der Boronsäuren oder ihre Derivate, gelegentlich auch Alkylborane, als metallorganische Kupplungspartner eingesetzt werden. Aufgrund ihrer vergleichsweise geringen Reaktivität tolerieren diese Borverbindungen die Anwesenheit vieler funktioneller Gruppen im Molekül und lassen sich sogar in wässrigen Reaktionsmedien umsetzen. Ebenso ist ihre Toxizität niedrig gegenüber anderen vergleichbar reaktiven Metallorganylen, z.B. Organozinnverbindungen (Stille-Kupplung).

Organische Aryl- und Heteroarylboronsäuren und ihre Derivate werden meist durch Umsetzung einer Aryl- oder Heteroaryllithium- oder -magnesium-Verbindung mit einem Borsäuretrialkylester und anschließender wässrig-saurer Hydrolyse hergestellt. Auf diesem Wege sind auch Pyridin-3-boronsäure (Li et al., J. Org. Chem. 2002, 67, 5394, und Cai et al., Tetrahedron Lett. 2002, 43, 4285) und Pyridin-4-boronsäure (Biradha et al., Angew. Chem. 2000, 112, 4001) hergestellt worden, die Pyridin-2-boronsäure konnte jedoch bisher nicht isoliert werden, da sie nicht stabil ist und während der Hydrolyse des tetravalenten Boraddukts zerfällt (F.C. Fischer et al., Recueil 1965, 84, 439). Mikhailov et al. (Bull. Acad. Sci. U.S.S.R. 1959, 1, 72; Izv. Akad. Nauk U.S.S.R. (Otdel. Khim. Nauk) 1959, 76) konnten zeigen, dass das Lithium-(2-Pyridyl)-triisobutoxyborat, hergestellt durch Addition von 2-Pyridyllithium an Triisobutylborat, beim Versuch der Hydrolyse mit Salzsäure oder Chlorwasserstoffgas sofort in Pyridin und Triisobutylborat zerfällt. Mit Wasser gelang es, durch Hydrolyse der Isobutoxy-Gruppen Lithium-2-Pyridyltrihydroxyborat zu erhalten, das sich jedoch ebenfalls nicht in Pyridin-2-boronsäure überführen lässt.

Eine vor kurzem von Wang et al. (J. Org. Chem. 2002, 67, 1041) für Phenylboronsäuren beschriebene Methode, den verlustträchtigen Hydrolyseschritt durch in situ-Umesterung des primären Boraddukts mit einem zweiwertigen Alkohol wie Ethylenglycol zu umgehen, um anstelle der freien Boronsäuren die cyclischen Boronsäureester zu erhalten, erbrachte im Falle von 2-Pyridinborderivaten keinen Erfolg.

Die direkte Synthese von 2-Pyridin-dimethylboronat aus metalliertem Pyridin und Trimethylborat ist zwar in der Literatur beschrieben (Sindkhedkar et al., Tetrahedron 2001, 57, 2991), das Produkt wird jedoch weder rein isoliert und charakterisiert noch aus dem Rohprodukt spektroskopisch charakterisiert; die sonstige verfügbare Literatur spricht dafür, dass es sich in diesen Fällen um das entsprechende Borat-Komplexsalz handelt und nicht um das Boronat. Da diese Substanz in der folgenden Kupplungsstufe in hohem Überschuss eingesetzt werden muss, ist dieses Verfahren relativ unökonomisch.

Eine weitere potentiell interessante Methode, Pyridinboronsäureester und andere Borderivate herzustellen, ist die übergangsmetallkatalysierte Umsetzung von Halogenaromaten mit Dioxaborolanen (vgl. Murata et al., J. Org. Chem. 2000, 65, 164) oder Dioxaborolanylen (vgl. Zaidlewicz et al., J. Organomet. Chem. 2002, 657, 129). In der Pyridinreihe konnte bislang lediglich die zweitgenannte Methode auf 3-Halopyridine (Ishiyama et al., Tetrahedron 2001, 57, 9813) angewandt werden. Eine aktuelle Veröffentlichung wendet diese Methode auf 2-Brompyridine an, kann die Produkte jedoch nicht unzersetzt isolieren und erhält bei den Versuchen, die Produkte in situ durch Suzuki-Kupplung abzufangen, hauptsächlich Homokupplungsprodukte (Fuller et al., Tetrahedron Lett. 2003, 44, 2935).

Aufgabe ist es somit ein wirtschaftliches und einfach durchführbares Verfahren bereitzustellen, das es erlaubt Pyridin-2-boronsäureester in hoher Reinheit und mit guten Ausbeuten herzustellen. Dies ist Voraussetzung für die Entwicklung ökonomisch sinnvoller Folgeprozesse mit einheitlichem Reaktionsverlauf.

Die vorliegende Erfindung erfüllt diese Aufgabe und betrifft Verfahren zur Herstellung von 2-Pyridinboronsäureestern der Formel I, 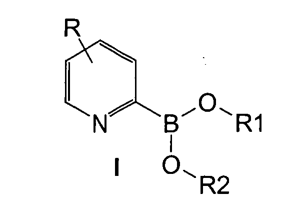 durch Umsetzung eines 2-Halogenpyridins (II) mit einem Metallierungsreagenz zu einer Organometallverbindung (III) (Schritt 1), anschließender Reaktion von (III) mit einem geeignetem Borsäureester (IV) zu Pyridin-Borkomplexsalzen (V) (Schritt 2), und abschließender Umsetzung der Komplexsalze (V) mit einer Protonenquelle unter Abspaltung eines Esterrestes am Bor zu 2-Pyridinboronsäureestern der Formel (I), 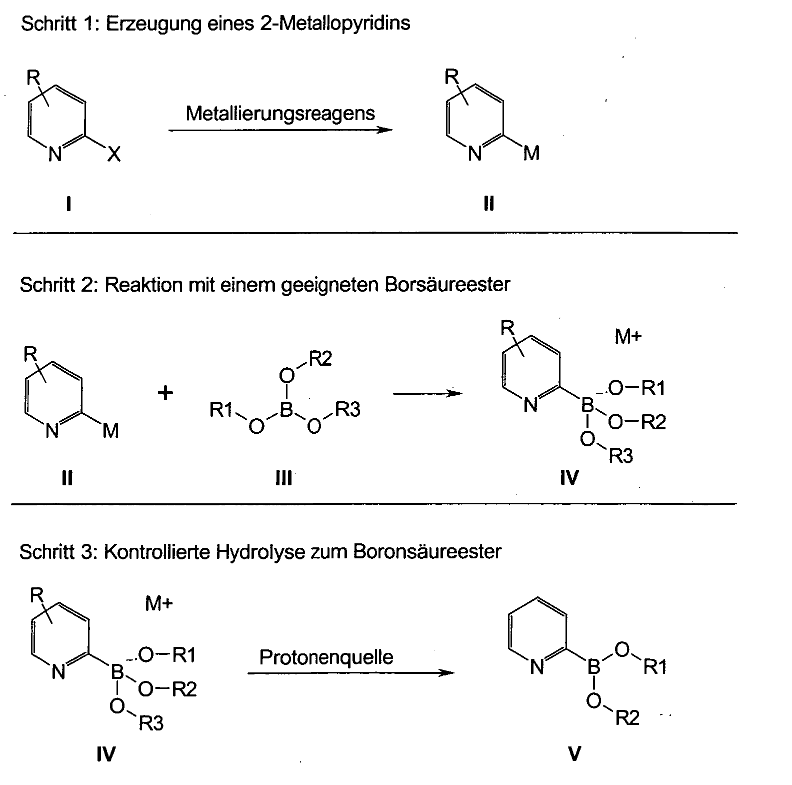 wobei
X H, Cl, Br, I oder F ist,
M Li oder MgHal (Hal = Cl, Br) bedeutet;
R für H, F, Cl, Br, I, einen verzweigten oder unverzweigten C₁-C₂₀, vorzugsweise C₁-C₈-Alkyl- oder Alkoxyrest, einen gegebenenfalls substituierten C₆ bis C₁₂-Arylrest oder einen Heteroarylrest, einen substituierten oder unsubstituierten Cycloalkylrest mit 3 bis 8 C-Atomen, Heteroaryloxy, Aryloxy, Dialkylamino, Diarylamino, Alkylthio, Arylthio oder für eine Cyano-, Ester-, Acetal, Mono- oder Dithioacetal oder Aminalgruppe steht;
die Reste R¹, R², R³ stehen unabhängig voneinander für einen verzweigten oder unverzweigten C₁-C₂₀-Alkyl- oder Alkoxyrest, einen Cycloalkyl-, Alkenyl-, Alkinyl- oder Heteroarylrest oder einen gegebenenfalls substituierten C₆ bis C₁₂-Arylrest oder zwei Reste R¹-R³ bilden zusammen einen Ring.

X ist bevorzugt Chlor, Brom oder lod, besonders bevorzugt Brom, im Fall der direkten Lithiierung mit Lithium-Metall besonders bevorzugt Chlor.

R¹, R² und R³ können unabhängig voneinander für Substituenten aus der Gruppe {Methyl, primäre, sekundäre oder tertiäre, cyclische oder acyclische Alkyl-, Alkenyl-, Alkinyl-, Aryl- oder Heteroarylreste mit 1 bis 20 C-Atomen, insbesondere 1 bis 8 C-Atomen, stehen, wobei bevorzugt zwei dieser Reste zusammen einen Ring im Sinne eines Dioxoborolans bilden.

R¹ und R² sind insbesondere verbrückende Reste, die mit dem Boratom und zwei Sauerstoffatomen einen Ring bilden, vor allem Ethylen, Tetramethylethylen, Propylen, Dimethylpropylen etc.
R³ entstammt bevorzugt der Gruppe der linearen oder verzeigten niederen Alkane und Cycloalkane, vor allem Methyl, Ethyl, Propyl, Butyl, Isopropyl, Isobutyl, tert.-Butyl, Pentyl, Isopentyl, Neopentyl, Cyclopentyl, Hexyl, Isohexyl, Cyclohexyl, Cycloheptyl, Cyclooctyl usw.

Metallierungsreagentien, die erfindungsgemäß zum Einsatz kommen können, sind beispielsweise Grignard-Verbindungen, Diorganomagnesiumverbindungen, wie Isopropyl-, Cyclohexyl- oder Cyclopentylmagnesiumhalogenide, Organolithiumverbindungen oder Triorganomagnesium-at-Komplexe, oder Alkalimetalldiorganoamide, oder Kombinationen aus Alkyllithiumverbindung und Komplexbildner, oder Kombinationen aus Alkyllithiumverbindungen und Alkalimetallalkoholaten oder elementares Magnesium oder Lithium in beliebiger Form, wie z.B. Granalien, Stangen oder Barren. Gegebenenfalls wird das Metallierungsreagenz in Gegenwart eines Redox-Katalysators eingesetzt.

In einer bevorzugten Ausführungsform wird ein 2-Lithiopyridin (III mit M=Li) durch Deprotonierung eines Pyridins (II) erzeugt, wozu im allgemeinen als Base entweder ein Lithiumamid (z.B. Lithiumdiisopropylamid) oder eine Kombination aus Organolithium-Verbindung und Komplexbildner (z.B. Butyllithium und N,N,N',N'-Tetramethylethylendiamin) oder eine Kombination aus Organolithiumverbindung und Alkalimetall-Alkoholat (z.B. Butyllithium und Kalium-tert-butanolat) zum Einsatz kommen.
Eine weitere Methode zur Metallierung der Halopyridine (II), ist die Umsetzung mit metallischem Lithium, gegebenenfalls in Gegenwart eines Redox-Katalysators.

In der besonders bevorzugten Ausführungsform wird eine Grignard-Verbindung bei Raumtemperatur bzw. eine Organolithium-Verbindung bei <-50°C vorgelegt bzw. (gegebenenfalls in situ) hergestellt und auf die gewünschte Temperatur gebracht und 2-Halopyridin langsam zudosiert, welches dabei durch Halogen-Magnesium-Austausch metalliert wird (vgl. Trecourt et al., Tetrahedron 2000, 56, 1349).

Das so in Schritt 1 erzeugte 2-Metallopyridin (III) wird durch Umsetzung mit einem organischen Borsäuretriester (IV) in ein Komplexsalz (V) überführt. Vorzugsweise wird die Temperatur für diese Umsetzung so gewählt, dass sie im Bereich von 0 bis 30°C liegt. Aus dem Komplexsalz (V) wird unter kontrollierten Bedingungen ein über ein Sauerstoffatom an das Boratom gebundener organischer Rest hydrolytisch durch Umsetzung mit einer Protonenquelle entfernt, wobei ein 2-Pyridinboronsäureester (I) freigesetzt wird.

Auch die Zudosierung des Halopyridins (II) im Gemisch mit dem Triorgänoborsäureester ist möglich. In einer alternativen Ausführungsform kann auch das Pyridinderivat vorgelegt werden, gegebenenfalls auch zusammen mit dem Triorganoborsäureester und die Organomagnesium- oder Organolithium-Verbindung zudosiert werden. In einer weiteren Ausführungsform wird ein 2-Halopyridin mit elementarem Lithium, gegebenenfalls in Gegenwart eines Katalysators und/oder in Gegenwart des Borates, umgesetzt. Insbesondere gute Ergebnisse bringt der Einsatz von Borsäureestern mit sterisch anspruchvollen Resten R¹ bis R³ in diesen Fällen.
Die Aufarbeitungsbedingungen, insbesondere der pH-Wert des Hydrolysemediums, werden so gewählt, dass der gewünschte Boronsäureester dabei nicht weiter hydrolysiert wird. Die Reinigung der erhaltenen Boronsäureester erfolgt bevorzugt durch Umkristallisation.

Als Protonenquelle werden insbesondere wässrige Lösungen saurer Salze in zweckmäßiger Konzentration eingesetzt. Erfindungsgemäß werden beispielsweise organisch substituierte Ammoniumchloride, Hydrogensulfate, Hydrogen- oder Dihydrogenphosphat der Alkalimetalle, aber auch saure Pufferlösungen und stark verdünnte Säuren verwendet. Vorzugsweise werden gesättigte Lösungen dieser Salze verwendet.

Vorzugsweise wird das erfindungsgemäße Verfahren in einem geeigneten organischen Lösungsmittel durchgeführt, bevorzugt in einem aliphatischen, aromatischen oder etherischen Lösungsmittel oder Mischungen dieser Lösungsmittel, besonders bevorzugt in Tetrahydrofuran, niederen Dialkylethern, Glyme, Diglyme, Toluol, Cyclohexan, Methylcyclohexan, Pentan, Hexan oder Heptan.

Der Temperaturbereich der bevorzugten Ausführungsform kann zwischen -100°C und 120°C liegen, bevorzugt ist die Durchführung zwischen 0°C und 40°C bei der Verwendung von Grignard-Verbindungen, zwischen -100°C und -30 C bei der Verwendung von Organolithium-Verbindungen oder Lithium-Metall zur Metallierung. Aufgrund der Feuchtigkeits- und Sauerstoffempfindlichkeit der metallorganischen Reagenzien und Intermediate wird die Reaktion bevorzugt unter einem trockenen Inertgas wie z.B. Stickstoff oder Argon durchgeführt.

Die so erhaltenen 2-Pyridinboronsäureester lassen sich problemlos in Suzuki-Kupplungen anstelle von Boronsäuren einsetzen. Das Verfahren bietet erstmals einen einfachen, kostengünstigen Weg zur Synthese dieser Verbindungen in reiner, einheitlicher Form.

Ein weiterer Vorteil des erfindungsgemäßen Verfahrens liegt darin, dass die Reaktion häufig unter milden Bedingungen zwischen 0°C und Raumtemperatur durchführbar ist und weder Tieftemperatur-Reaktoren noch drastische Reaktionsbedingungen erfordert.

Weiterhin vorteilhaft ist, dass die bevorzugten gemischten Triorganoborsäureester in hohen Ausbeuten in einem Reaktionsschritt aus preiswerten Ausgangsmaterialien hergestellt werden können, nämlich Borsäure, einem einwertigen und einem zweiwertigen Alkohol.

Das erfindungsgemäße Verfahren soll durch die nachfolgenden Beispiele erläutert werden, ohne die Erfindung darauf zu beschränken:

### Beispiel 1

### a) Herstellung von 2-Cyclohexyloxy-4,4,5,5-tetramethyl-[1,3,2]dioxaborolan

42,40 g (423,1 mmol) Cyclohexanol, 26,16 g (423,1 mmol) Borsäure und 50,00 g (423,1 mmol) Pinacol wurden in 200 ml Toluol am Wasserabscheider gekocht, bis kein weiteres Wasser mehr entstand. Das Reaktionsgemisch wurde eingeengt und der Rückstand destilliert. Man erhielt das Produkt als farbloses Öl (91,48 g, 404,6 mmol, 96 %).

### b) Herstellung von 2-(4,4,5,5-Tetramethyl-[1,3,2]dioxaborolan-2-yl)pyridin durch Halogen-Metall-Austausch mit einer Grignard-Verbindung

Zu einer bei Raumtemperatur vorgelegten Lösung von Cyclohexylmagnesiumchlorid (68 ml einer 1 M Lösung in Diethylether/THF-Gemisch 1:1) wurden 6,2 ml (65,0 mmol) 2-Brompyridin getropft. Das Reaktionsgemisch wurde für 2 h bei 20 bis 25°C gerührt und dann auf 0°C gekühlt. 15,4 g (68,0 mmol) des 2-Cyclohexyloxy-4,4,5,5,-tetramethyl-[1,3,2]dioxaborolans wurden zugetropft, wobei die Temperatur zwischen 0 und 10°C gehalten wurde. Nach Beendigung der Zudosierung wurde noch 3 h bei Raumtemperatur nachgerührt.
Zur Aufarbeitung wurde das Reaktionsgemisch mit 40 ml Toluol verdünnt, auf 0°C gekühlt, mit 25 ml gesättigter Ammoniumchlorid-Lösung hydrolysiert und schließlich mit 20 ml Wasser versetzt. Die organische Phase wurde abgetrennt, über Natriumsulfat getrocknet und eingeengt. Das ölige Rohprodukt wurde aus Acetonitril umkristallisiert. Man erhielt 7,0 g (34,1 mmol, 52,5 % d. Theorie) des Produkts als farblosen Feststoff.

### Beispiel 2

### Herstellung von 2-(4,4,5,5-Tetramethyl-[1,3,2]dioxaborolan-2-yl)pyridin durch Halogen-Metall-Austausch mit einer Organolithiumverbindung

Zu einer bei -78°C vorgelegten Lösung von 6,2 ml (65,0 mmol) 2-Brompyridin in 70 ml Tetrahydrofuran wurden 40,6 ml (65,0 mmol) einer 1,6 m Lösung von Butyllithium in Hexan getropft. Das Reaktionsgemisch wurde für 30 min bei -78°C gerührt und dann mit 15,4 g (68,0 mmol) des 2-Cyclohexyloxy-4,4,5,5,-tetramethyl-[1,3,2]dioxaborolans (s. Beispiel 1) versetzt, wobei die Temperatur unter -70°C gehalten wurde. Nach Beendigung der Zudosierung wurde langsam auf 0°C erwärmt.
Zur Aufarbeitung wurde das Reaktionsgemisch mit 40 ml Toluol verdünnt, auf 0°C gekühlt, mit 25 ml gesättigter Ammoniumchlorid-Lösung hydrolysiert und schließlich mit 20 ml Wasser versetzt. Die organische Phase wurde abgetrennt, über Natriumsulfat getrocknet und eingeengt. Das ölige Rohprodukt wurde aus Acetonitril umkristallisiert. Man erhielt 7,88 g (38,4 mmol, 59 % d. Theorie) des Produkts als farblosen Feststoff.

### Beispiel 3

### Herstellung von 2-(4,4,5,5-Tetramethyl-[1,3,2]dioxaborolan-2-yl)pyridin durch direkte ortho-Metallierung

Bei -78°C wurde 14,1 ml (100 mmol) Diisopropylamin in 50 ml THF tropfenweise mit 62,5 ml (100 mmol) einer 1,6 M Lösung von Butyllithium in Hexan versetzt und 1 h gerührt. Dann wurden langsam 8,2 ml (100 mmol) trockenes Pyridin in 50 ml Tetrahydrofuran zugetropft, wobei die Temperatur unter -70°C gehalten wurde. Nach vierstündigem Nachrühren bei -70°C wurde das Reaktionsgemisch mit 24,91 g (110,0 mmol) des 2-Cyclohexyloxy-4,4,5,5,-tetramethyl-[1,3,2]dioxaborolans (s. Beispiel 1) versetzt, wobei die Temperatur unter -70 °C gehalten wurde. Nach Beendigung der Zudosierung wurde langsam auf 0°C erwärmt.
Die hydrolytische Aufarbeitung wurde wie in Beispiel 2 beschrieben durchgeführt. Man erhielt 14,94 g (72,8 mmol, 73 %) des Produkts.

### Beispiel 4

### Herstellung von 2-(4,4,5,5-Tetramethyl-[1,3,2]dioxaborolan-2-yl)pyridin durch direkte Lithiierung

Bei -78°C wurden 13,88 g (200 mmol) Lithium-Schnitzel und 50 mg Naphtalin in 100 ml Tetrahydrofuran unter Argon vorgelegt und vorsichtig mit 9,4 ml (100 mmol) 2-Chlorpyridin versetzt. Man rührte bei max. -65°C, bis die GC-Umsatzkontrolle vollständigen Umsatz des Chlorpyridins anzeigte (8-12 h). Dann wurde das Reaktionsgemisch mit 24,91 g (110,0 mmol) des 2-Cyclohexyloxy-4,4,5,5,-tetramethyl-[1,3,2]dioxaborolans (s. Beispiel 1 ) versetzt, wobei die Temperatur unter -70°C gehalten wurde. Nach Beendigung der Zudosierung wurde langsam auf 0°C erwärmt.
Die hydrolytische Aufarbeitung wurde wie in Beispiel 2 beschrieben durchgeführt. Man erhielt 15,14 g (75,2 mmol, 75 %) des Produkts.

### Beispiel 5

### Herstellung von 2-(4,4,5,5-Tetramethyl-[1 ,3,2]dioxaborolan-2-yl)pyridin durch direkte Lithiierung in Gegenwart des Triorganoborats (in situ-Variante)

Bei -78°C wurden 13,88 g (200 mmol) Lithium-Schnitzel und 50 mg Naphtalin in 100 ml Tetrahydrofuran unter Argon vorgelegt und vorsichtig mit 9,4 ml (100 mmol) 2-Chlorpyridin und 24,91 g (110,0 mmol) des 2-Cyclohexyloxy-4,4,5,5,-tetramethyl-[1,3,2]dioxaborolans (s. Beispiel 1) versetzt. Man rührte bei max. -50°C, bis die HPLC-Umsatzkontrolle vollständigen Umsatz (6 bis 8 h). Dann wurde langsam auf 0°C erwärmt.
Die hydrolytische Aufarbeitung wurde wie in Beispiel 2 beschrieben durchgeführt. Man erhielt 16,19 g (78,9 mmol, 79,%) des Produkts.

### Beispiel 6

### Herstellung von 2-(4,4,5,5-Tetramethyl-[1,3,2Jdioxaborolan-2-yl)pyridin durch Halogen-Metall-Austausch mit einer Grignard-Verbindung bei inverser Zugabereihenfolge

Zu einer bei Raumtemperatur vorgelegten Lösung von 6,2 ml (65,0 mmol) 2-Brompyridin in 34 ml Tetrahydrofuran wurden 34 ml einer 2 M Lösung von Cyclohexylmagnesiumchlorid in Diethylether getropft. Das Reaktionsgemisch wurde für 2 h bei 20 bis 25°C gerührt und dann langsam zu einer auf 0°C gekühlten Lösung des 15,4 g (68,0 mmol) des 2-Cyclohexyloxy-4,4,5,5,-tetramethyl-[1,3,2]dioxaborolans in 30 ml Tetrahydrofuran getropft, wobei die Temperatur zwischen 0 und 10°C gehalten wurde. Nach Beendigung der Zudosierung wurde noch 3 h bei Raumtemperatur nachgerührt.
Die Aufarbeitung erfolgte wie in Beispiel 1. Man erhielt 6,9 g (33,8 mmol, 52 % d. Theorie) des Produkts als farblosen Feststoff.

### Beispiel 7

### a) Herstellung von 2-Isopropoxy-[1,3,2]dioxaborolan

40 g (667 mmol) Isopropanol, 41,22 g (667 mmol) Borsäure und 41,33 g (667 mmol) Ethylenglycol wurden in 350 ml Toluol am Wasserabscheider gekocht, bis kein weiteres Wasser mehr entstand. Das Reaktionsgemisch wurde eingeengt und der Rückstand destilliert. Man erhielt das Produkt als farbloses Öl (81,19 g, 625,5 mmol, 94 %).

### b) Herstellung von 2-[1,3,2]dioxaborolan-2-yl)-pyridin

Zu einer bei -78°C vorgelegten Lösung von 9,5 ml (100 mmol) 2-Brompyridin in 100 ml Tetrahydrofuran wurden 62.5 ml (100 mmol) einer 1,6 m Lösung von Butyllithium in Hexan getropft. Das Reaktionsgemisch wurde für 30 min bei -78°C gerührt und dann mit 14,28 g (110 mmol) des 2-Isopropoxy-[1,3,2]dioxaborolans versetzt, wobei die Temperatur unter -70°C gehalten wurde. Nach Beendigung der Zudosierung wurde langsam auf 0°C erwärmt.
Zur Aufarbeitung wurde das Reaktionsgemisch mit 40 ml Toluol verdünnt, auf 0°C gekühlt, mit 25 ml gesättigter Natriumdihydrogenphosphat-Lösung hydrolysiert und schließlich mit 20 ml Wasser versetzt. Die organische Phase wurde abgetrennt, über Natriumsulfat getrocknet und eingeengt. Man erhielt 10,04 g (ca. 58,7 mmol, ca. 38 %) eines öligen Rohprodukts mit ca. 87 %iger Reinheit (It. GC).

### Beispiel 8

### Herstellung von 2-Pyridyldiisopropylborat

Zu einer bei Raumtemperatur vorgelegten Lösung von Cyclohexylmagnesiumchlorid (68 ml einer 1 M Lösung in Diethylether/THF-Gemisch 1:1) wurden 6,2 ml (65,0 mmol) 2-Brompyridin getropft. Das Reaktionsgemisch wurde für 2 h bei 20 bis 25°C gerührt und dann auf 0°C gekühlt. 13,45 g (68,0 mmol) Triisopropylborat wurden zugetropft, wobei die Temperatur zwischen 0 und 10°C gehalten wurde. Nach Beendigung der Zudosierung wurde noch 3 h bei Raumtemperatur nachgerührt.
Zur Aufarbeitung wurde das Reaktionsgemisch mit 40 ml Toluol verdünnt, auf 0°C gekühlt, mit 25 ml gesättigter Ammoniumchlorid-Lösung hydrolysiert und schließlich mit 20 ml Wasser versetzt. Die organische Phase wurde abgetrennt, über Natriumsulfat getrocknet und eingeengt. Man erhielt 3,22 g (15,6 mmol, 24 % d. Theorie) des Produkts als bräunliches Öl.

### Beispiel 9

### Herstellung von 5-Fluor-2-(4,4,5,5-tetramethyl-[1 ,3,2]dioxaborolan-2-yl)pyridin durch Halogen-Metall-Austausch mit einer Organolithiumverbindung

Zu einer bei -78°C vorgelegten Lösung von 1,00 g (5,68 mmol) 2-Brom-5-fluorpyridin in 10 ml Tetrahydrofuran wurden 3,6 ml (5.68 mmol) einer 1,6 M Lösung von Butyllithium in Hexan getropft. Das Reaktionsgemisch wurde für 30 min bei -78°C gerührt und dann mit 1,29 g (5,68 mmol) des 2-Cyclohexyloxy-4,4,5,5,-tetramethyl-[1,3,2]dioxaborolans (s. Beispiel 1) versetzt, wobei die Temperatur unter -70°C gehalten wurde. Nach Beendigung der Zudosierung wurde langsam auf 0°C erwärmt.
Zur Aufarbeitung wurde das Reaktionsgemisch mit 10 ml Toluol verdünnt, auf 0°C gekühlt, mit 5 ml gesättigter Ammoniumchlorid-Lösung hydrolysiert und schließlich mit 2,5 ml Wasser versetzt. Die organische Phase wurde abgetrennt, über Natriumsulfat getrocknet und eingeengt. Das ölige Rohprodukt wurde aus Acetonitril umkristallisiert. Man erhielt 0,80 g (3,58 mmol, 63 % d. Theorie) des Produkts als farblosen Feststoff.

## Patentansprüche

1. Verfahren zur Herstellung von 2-Pyridinboronsäureestern der Formel I, 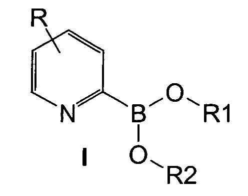 durch Umsetzung eines 2-Halogenpyridins (II) mit einem Metallierungsreagenz zu einer Organometallverbindung (III) (Schritt 1), anschließender Reaktion von (III) mit einem geeignetem Borsäureester (IV) zu Pyridin-Borkomplexsalzen (V) (Schritt 2), und abschließender Umsetzung der Komplexsalze (V) mit einer Protonenquelle unter Abspaltung eines Esterrestes am Bor zu 2-Pyridinboronsäureestern der Formel (I), 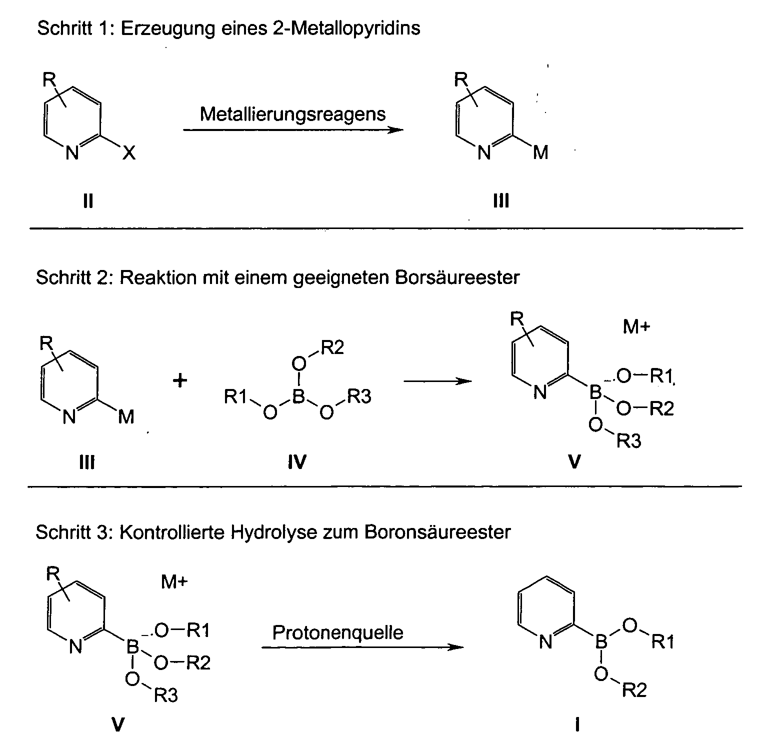 wobei
X H, Cl, Br, I oder F ist;
M Li oder MgHal (Hal = Cl, Br) bedeutet;
R für H, F, Cl, Br, I, einen verzweigten oder unverzweigten C₁-C₂₀-Alkyl- oder Alkoxyrest, einen gegebenenfalls substituierten C₆ bis C₁₂-Arylrest oder einen Heteroarylrest, einen substituierten oder unsubstituierten Cycloalkylrest mit 3 bis 8 C-Atomen, Heteroaryloxy, Aryloxy, Dialkylamino, Diarylamino, Alkylthio, Arylthio oder für eine Cyano-, Ester-, Acetal, Mono- oder Dithioacetal oder Aminalgruppe steht; die Reste R¹, R², R³ stehen unabhängig voneinander für einen verzweigten oder unverzweigten C₁-C₂₀-Alkyl- oder Alkoxyrest, einen Cycloalkyl-, Alkenyl-, Alkinyl- oder Heteroarylrest oder einen gegebenenfalls substituierten C₆ bis C₁₂-Arylrest oder zwei Reste R¹ bis R³ bilden zusammen einen Ring.

2. Verfahren nach Anspruch 1, **gekennzeichnet dadurch, dass** die Metallierung zu dem Pyridinderivat (III) in Schritt 1 durch Umsetzung eines 2-Halopyridins (II) mit einer Organomagnesiumverbindung erfolgt.

3. Verfahren nach Anspruch 1, **gekennzeichnet dadurch, dass** die Metallierung zu dem Pyridinderivats (III) in Schritt 1 durch Umsetzung eines 2-Halopyridins (II) mit einer Organolithiumverbindung erfolgt.

4. Verfahren nach Anspruch 1 **gekennzeichnet dadurch, dass** die Darstellung des metallierten Pyridinderivates (III) in Schritt 1 durch Umsetzung eines 2-Halopyridins (II) mit elementarem Lithium, gegebenenfalls unter Mitwirkung eines Redox-Katalysators, erfolgt.

5. Verfahren nach mindestens einem der vorhergehenden Ansprüche, **dadurch gekennzeichnet, dass** die Schritte 1 bis 3 in einem Lösungsmittel bei einer Temperatur im Bereich von -100 bis 120°C durchgeführt werden.

6. Verfahren nach mindestens einem der vorhergehenden Ansprüche, **gekennzeichnet dadurch, dass** zwei der Reste R¹, R² und R³ im Triorganoborat (IV) miteinander verbunden sind, so dass sie einen Ring im Sinne eines Dioxaborolans bilden.

7. Verfahren nach mindestens einem der vorhergehenden Ansprüche, **gekennzeichnet dadurch, dass** Schritte 1, 2 und 3 in einem Lösungsmittel oder Lösungsmittelgemisch durchgeführt werden, das mindestens ein Lösungsmittel aus der folgenden Gruppe enthält: Triethylamin, Diethylether, Di-n-propylether, Diisopropylether, Dibutylether, Tetrahydrofuran, tert.-Butylmethylether, Benzol, Toluol, Xylol, Anisol, Pentan, Hexan, Isohexan, Heptan, Petrolether (Alkangemische), Cyclohexan, Methylcyclohexan.

8. Verfahren nach mindestens einem der vorhergehenden Ansprüche, **gekennzeichnet dadurch, dass** zur Hydrolyse des Borat-Komplexsalzes in Schritt 3 eine wässrige Lösung einer Protonenquelle zugegeben wird, wobei die Protonenquelle aus der folgenden Gruppe ausgewählt ist: Ammoniumhalogenid, Mono-, Di- oder Triorganoammoniumhalogenid, Alkali-Dihydrogenphosphat, Dialkali-Hydrogenphosphat, Alkali-Hydrogensulfat, Halogenwasserstoff.

9. Verfahren nach mindestens einem der vorhergehenden Ansprüche, **gekennzeichnet dadurch, dass** das Metallierungsmittel in einem Lösungsmittel vorgelegt wird, dann das Halopyridin (II), gegebenenfalls in einem Lösungsmittel gelöst, zudosiert wird, und anschließend der Borsäureester (IV), mit dem Reaktionsgemisch zur Reaktion gebracht wird.

10. Verfahren nach mindestens einem der Ansprüche 1 bis 8, **gekennzeichnet dadurch, dass** das Metallierungsmittel in einem Lösungsmittel vorgelegt wird und das Halopyridin (II) und der Borsäureester (IV) gleichzeitig, gegebenenfalls in einem Lösungsmittel gelöst, entweder parallel oder als Gemisch oder als Gemisch in einem Lösungsmittel, zudosiert wird.

11. Verfahren nach mindestens einem der Ansprüche 1 bis 8, **gekennzeichnet dadurch, dass** das Halopyridin (II) und der Borsäureester (IV), gegebenenfalls in einem Lösungsmittel gelöst, vorgelegt werden und das Metallierungsmittel in einem Lösungsmittel zudosiert wird.
